# EUROPEAN PATENT APPLICATION

(11) **EP 4 697 463 A1**
(43) Date of publication of application: **18.02.2026**
(21) Application number: 25189298.0
(22) Date of filing: 14.07.2025
(51) Int. Cl.: H01M 50/107, H01M 50/152, H01M 50/531, H01M 50/533, H01M 50/536, H01M 50/538, H01M 50/578

(54) **SECONDARY BATTERY, BATTERY CELL, AND ELECTRONIC DEVICE**

(30) Priority: 15.08.2024 CN 202421980879 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery cell (10), and an electronic device (1) are provided. The secondary battery (100) includes a housing (110) including a side wall (112), an electrode assembly (120) accommodated in the housing (110), and a current collecting member (150) including a current collecting body (151) and multiple housing connection portions (152) surrounding the current collecting body (151). One end of the side wall (112) is formed with an opening (113), and one end of the side wall (112) close to the opening (113) includes a rolling groove (114). The electrode assembly (120) includes a tab (124, 125) facing the opening (113). The current collecting body (151) includes multiple tab connection portions (153) connected to the tab (124, 125). The housing connection portion (152) includes a bent section (1521) welded to the rolling groove (114) and a straight section (1522) connected to the current collecting body (151).

## Description

### BACKGROUND

### Technical Field

The disclosure relates to a technical field of a battery, and more particularly, to a secondary battery, a battery cell, and an electronic device.

### Description of Related Art

Mechanical sealing is a mainstream packaging method for existing cylindrical batteries, which is widely used because of its advantages of mature process and devices as well as fast takt time on production. In the cylindrical batteries of the related art, a current collecting member is usually disposed near an opening of a housing, so that one end of the current collecting member is welded and connected to a side wall of the housing, and another end is electrically connected to a tab of an electrode assembly, thereby realizing electrical connection between the housing and the electrode assembly. Then, mechanical sealing is performed, including rolling a rolling groove recessed toward an inside of the housing on the side wall of the housing, and then pressing a cover plate tightly by pier sealing. In this process, bending stress generated by the current collecting member will cause warp inside the current collecting member, resulting in a welding portion between the current collecting member and the tab being pulled apart, thereby causing a risk of failure of the electrical connection of the electrode assembly.

### SUMMARY

In view of the above shortcomings of the related art, the disclosure provides a secondary battery, a battery cell, and an electronic device to improve a technical issue that welding failure between a current collecting member and a tab is prone to occur in a mechanical sealing process of a cylindrical battery.

To achieve the above objectives and other related objectives, the disclosure provides a secondary battery. The secondary battery includes a housing, an electrode assembly, and a current collecting member. The housing includes a surrounding side wall. One end of the side wall is formed with an opening, and one end of the side wall close to the opening includes a rolling groove recessed toward an inside of the housing. The electrode assembly is accommodated in the housing, and the electrode assembly includes a tab facing the opening. The current collecting member includes a current collecting body and multiple housing connection portions connected to an outer periphery of the current collecting body. The current collecting body includes multiple tab connection portions fixedly connected to the tab. The housing connection portion includes a bent section bent toward an axis of the housing and a straight section connected to the current collecting body. The bent section is welded to a surface of the rolling groove facing the electrode assembly. Along a circumferential direction of the housing, the housing connection portion is located between the two adjacent tab connection portions, a through hole is disposed between the two adjacent tab connection portions, and a first connection portion is formed between each of the tab connection portions and the straight section.

In the above technical solution, along the circumferential direction of the housing, the housing connection portion is located between the two adjacent pole tab connection portions, so that the housing connection portion and the pole tab connection portions are disposed in a staggered manner in the circumferential direction of the housing. This configuration may implement that when the housing connection portion is bent, bending stress is not directly actuated to the pole tab connection portion when it is transmitted toward the current collecting body, so as to weaken transmission of the bending stress toward the pole tab connection portion.

In addition, the through hole is disposed between the two adjacent pole tab connection portions, and the first connection portion is formed between each of the pole tab connection portions and the straight section. Due to presence of the through hole, a width of the first connection portion is reduced, and the bending stress transmitted toward the pole tab connection portion may be weakened. At the same time, since strength of the first connection portion is weakened, the first connection portion is easily deformed under actuation of the bending stress and absorbs part of the bending stress, which may further weaken the transmission of the bending stress toward the pole tab connection portion, thereby improving the issue of welding failure between the current collecting member and the pole tab caused by the bending stress.

In an example of the secondary battery of the disclosure, a gap is disposed between the straight section and the pole tab connection portion, and the first connection portion is located between the gap and the through hole.

In the above technical solution, the configuration of the gap may further reduce the strength of the first connection portion, making it easier to be deformed and absorb more stress, and ultimately further weakening the transmission of the bending stress toward the pole tab connection portion.

In an example of the secondary battery of the disclosure, a sum of minimum overcurrent areas of all the first connection portions is a, and a total area of welding lines formed by welding the pole tab connection portion and the pole tab is s, where a>s.

In the above technical solution, the minimum overcurrent area of the first connection portion is a minimum portion of a cross-sectional area of each of the first connection portions along a circumferential direction of the current collecting member. The total area of the welding lines refers to a projection area of all the welding lines formed by welding the pole tab connection portion and the pole tab along an axial direction of the electrode assembly. This configuration that the sum a of the minimum overcurrent areas of all the first connection portions is greater than the total area of the welding lines may weaken the transmission of the bending stress while not affecting an overcurrent effect of the first connection portion.

In an example of the secondary battery of the disclosure, the straight section includes a first weak portion.

In the above technical solution, the first weak portion is disposed on the straight section, which may weaken the stress generated when the housing connection portion is bent. At the same time, since strength of the first weak portion is relatively low, under the actuation of the stress, the first weak portion of the straight section is deformed first to reduce the transmission of the stress toward a welding connection portion between the current collecting member and the pole tab, thereby improving the issue of welding failure between the current collecting member and the pole tab caused by the bending stress.

In an example of the secondary battery of the disclosure, the first weak portion includes one or more combinations of thinning, notching, and hollowing.

In the above technical solution, the one or more combinations of thinning, notching, and hollowing may achieve an effect of reducing the strength of the first weak portion by reducing a cross-sectional area of the first weak portion.

In an example of the secondary battery of the disclosure, a sum of minimum overcurrent areas of all the first weak portions is b, and a total area of welding lines formed by welding the current collecting body and the pole tab is s, where b>s.

In the above technical solution, the minimum overcurrent area of the first weak portion is a minimum portion of a cross-sectional area of each of the first weak portions along the circumferential direction of the current collecting member, and the total area of the welding lines refers to the projection area of all the welding lines formed by welding the pole tab connection portion and the pole tab along the axial direction of the electrode assembly. This configuration that the sum b of the minimum overcurrent areas of all the first weak portions is greater than the total area of the welding lines may weaken the transmission of the bending stress while not affecting an overcurrent effect of the first weak portion.

In an example of the secondary battery of the disclosure, the thinning and the notching both form a groove in the straight section, and the groove is located on one side of the current collecting body facing the electrode assembly.

In the above technical solution, the bending stress generated by the housing connection portion will cause warp of the pole tab connection portion. Similarly, the first weak portion of the straight section also has a tendency to bulge in a direction away from the electrode assembly. If the groove is located on one side of the current collecting body away from the electrode assembly, when the first weak portion bulges, there is a risk of breaking the first weak portion. Therefore, by disposing the groove on the side of the current collecting body facing the electrode assembly, the risk of breaking the first weak portion may be reduced while weakening the transmission of the bending stress.

In an example of the secondary battery of the disclosure, a center hole is disposed at a center of the current collecting body, a second weak portion is included between each of the through holes and the center hole, and the second weak portion is configured to be broken when an internal pressure of the secondary battery exceeds a threshold value, so that the center hole and the through hole are communicated in a radial direction of the secondary battery.

In the above technical solution, when the internal pressure exceeds the threshold value, the second weak portion is broken, the central hole and the through hole are communicated, and the current collecting body is divided into several thin sheets. Under impact of the internal pressure, each of the thin sheets in a middle portion of the current collecting body is folded in a direction away from the electrode assembly, further reducing a blocking area, facilitating discharge of internal substances of the second battery, thereby helping to prevent explosion of the secondary battery and improving safety performance of the secondary battery.

The disclosure further provides a battery cell. The battery cell includes any one of the above secondary batteries.

The disclosure further provides an electronic device. The electronic device includes the above battery cell.

In the secondary battery of the disclosure, along the circumferential direction of the housing, the housing connection portion is located between the two adjacent pole tab connection portions, so that the housing connection portion and the pole tab connection portions are disposed in the staggered manner in the circumferential direction of the housing. This configuration may implement that when the housing connection portion is bent, the bending stress is not directly actuated to the pole tab connection portion when it is transmitted toward the current collecting body, so as to weaken the bending stress transmitted toward the pole tab connection portion.

In addition, the through hole is disposed between the two adjacent pole tab connection portions, and the first connection portion is formed between each of the pole tab connection portions and the straight section. Due to the presence of the through hole, the width of the first connection portion is reduced, and the bending stress transmitted toward the pole tab connection portion may be weakened. At the same time, since strength of the first connection portion is weakened, the first connection portion is easily deformed under actuation of the bending stress and absorbs part of the bending stress, which may further weaken the transmission of the bending stress toward the pole tab connection portion, thereby improving the issue of welding failure between the current collecting member and the pole tab caused by the bending stress.

### BRIEF DESCRIPTION OF THE DRAWINGS

In order to more clearly describe the embodiments of the disclosure or the technical solutions in the related art, the drawings required for use in descriptions of the embodiments or the related art will be briefly introduced below. Obviously, the drawings in the following descriptions are only some embodiments of the disclosure. For those skilled in the art, other embodiments may be obtained based on the drawings without creative work.
FIG. 1 is a schematic view of an overall structure according to an example of a secondary battery of the disclosure.
FIG. 2 is a schematic view of a structure of an electrode assembly according to an example of the secondary battery of the disclosure.
FIG. 3 is a schematic view of a structure of a current collecting member before being bent according to the first embodiment of the secondary battery of the disclosure.
FIG. 4 is a top view of the current collecting member in FIG. 3.
FIG. 5 is a schematic view of a structure of a current collecting member before being bent according the second embodiment of the secondary battery of the disclosure.
FIG. 6 is a partial enlarged view of a portion A in FIG. 5.
FIG. 7 is a top view of the current collecting member in FIG. 5.
FIG. 8 is a bottom view of the current collecting member in FIG. 5.
FIG. 9 is a schematic view of a structure of a current collecting member before being bent according to the third embodiment of the secondary battery of the disclosure.
FIG. 10 is a top view of the current collecting member in FIG. 9.
FIG. 11 is a schematic view according to an example of a battery cell of the disclosure.
FIG. 12 is a schematic view according to an example of an electronic device of the disclosure.

### DETAILED DESCRIPTION OF DISCLOSED EMBODIMENTS

The following describes the implementation of the disclosure through specific examples. Those skilled in the art may easily understand other advantages and effects of the disclosure from the contents disclosed in the specification. The disclosure may also be implemented or applied through other different specific implementations, and the details in the specification may also be modified or changed in various ways based on different viewpoints and applications without departing from the spirit of the disclosure. It should be noted that the following embodiments and features therein may be combined with each other if there is no conflict. It should also be understood that the terms used in the embodiments of the disclosure are intended to describe specific implementation schemes rather than to limit the scope of protection of the disclosure. The test methods in the following embodiments without specifying specific conditions are usually carried out under conventional conditions or under conditions recommended by the manufacturers.

When numerical ranges are given in the embodiments, it should be understood that, unless otherwise specified in the disclosure, both endpoints of each of the numerical ranges and any numerical value between the two endpoints may be selected. Unless otherwise defined, all technical and scientific terms used in the disclosure are consistent with the knowledge of the related art of those skilled in the art and the records of the disclosure. The disclosure may also be implemented using any methods, devices, and materials in the related art that are similar or equivalent to the methods, devices, and materials in the embodiments of the disclosure.

It should be noted that the terms such as "up", "down", "left", "right", "middle", and "one" cited in the specification are only for the convenience of description and are not intended to limit the scope of implementation of the disclosure. Changes or adjustments in relative relationships thereof should be regarded as the scope of implementation of the disclosure without substantially changing the technical contents.

A secondary battery includes an electrode assembly. The electrode assembly is a component in the secondary battery where an electrochemical reaction occurs, and may include one or more electrode assemblies.

The secondary battery further includes a housing, a cover plate, and a pole post. The housing includes an end wall and a side wall surrounding the end wall. There is an opening at one end of the side wall. The electrode assembly may be assembled into the housing through the opening of the housing. The cover plate is used to cover the opening of the housing to achieve sealing. The pole post passes through the end wall and is electrically connected to the electrode assembly, so as to output electrical energy generated by the electrode assembly.

A mainstream packaging method of the existing secondary battery is mechanical sealing, which has advantages of mature process and devices as well as fast takt time on production, and is widely used. A current collecting member is electrically connected to the electrode assembly and the housing at the same time to achieve electrical connection between the electrode assembly and the housing. Specifically, a rolling groove recessed toward an inside of the housing is first rolled on the side wall of the housing. The rolling groove is pressed tightly against an edge of the current collecting member on one side close to the electrode assembly, and the rolling groove may limit an axial displacement of the electrode assembly. The cover plate is installed on a step formed on one side of the rolling groove away from the electrode assembly. A sealing member is disposed between the cover plate and the housing. Then, the cover plate is pressed tightly against the sealing member by pier sealing at an edge of the opening, so as to form reliable connection and achieve sealing of the housing.

There are many ways to connect the current collecting member and the housing. One commonly used method is to dispose a housing connection portion on the edge of the current collecting member. The housing connection portion is first welded and fixed to the side wall of the housing, and then the rolling groove is rolled on the side wall, so that the housing connection portion continues to be bent toward an axis of the housing. However, the inventor found that when the housing connection portion is bent toward the axis of the housing, bending stress will be generated, and the bending stress will be further transmitted to an inside of the current collecting member, thereby causing warp inside the current collecting member, resulting in a welding portion between the current collecting member and a tab being pulled apart, , thereby causing a risk of failure of the electrical connection of the electrode assembly.

In view of the above, the disclosure provides a technical solution, in which the housing connection portion and a tab connection portion are disposed in a staggered manner in a circumferential direction of the housing. This configuration may implement that when the housing connection portion is bent, the bending stress is not directly actuated to the tab connection portion when it is transmitted toward the current collecting body, so as to weaken the bending stress transmitted toward the tab connection portion, thereby improving an issue of welding failure between the current collecting member and the tab caused by the bending stress.

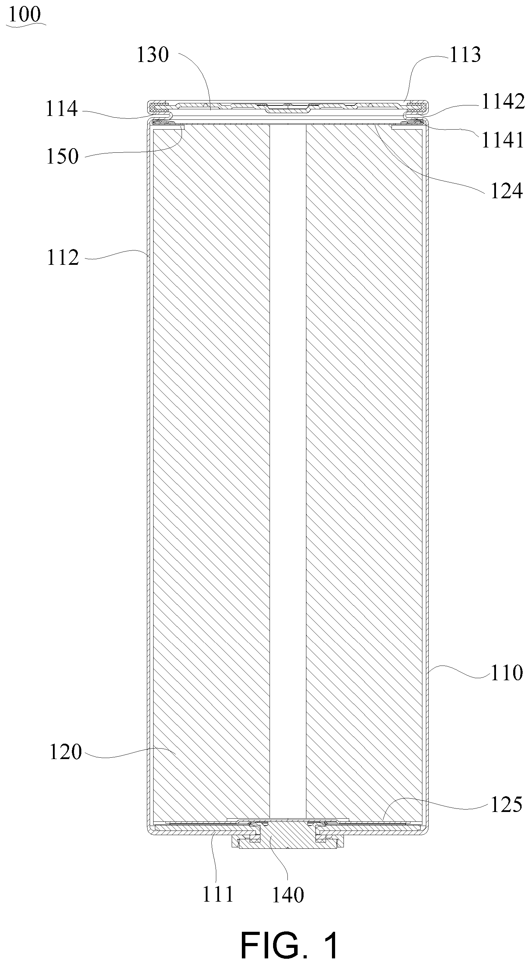

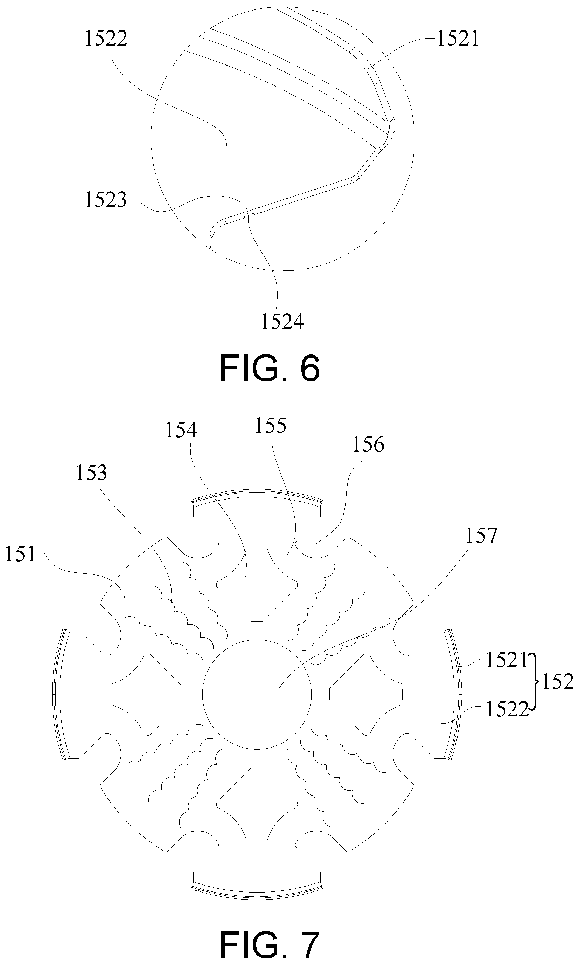

Referring to FIGs. 1 to 12, the disclosure provides a secondary battery 100. The secondary battery 100 includes a housing 110, an electrode assembly 120, a pole post 140, and a current collecting member 150.

Referring to FIG. 1, the housing 110 includes an end wall 111 and a side wall 112 surrounding the end wall 111. As long as a stable sealing and electrical connection relationship may be formed, connection between the end wall 111 and the side wall 112 may be achieved in a variety of ways, which may be, for example, in forms of integral stamping, integral casting, split welding, etc. The surrounding of the side wall 112 is not limited, which may be cylindrical or prismatic, or may be along any other closed loop contour that may match the end wall 111. In this embodiment, an outer edge of the end wall 111 is circular, the side wall 112 is cylindrical and surrounds the outer edge of the end wall 111, and a circular opening 113 is formed at one end of the side wall 112 away from the end wall 111. An accommodating cavity is formed in the housing 110 surrounded by the end wall 111 and the side wall 112 for accommodating the electrode assembly 120, an electrolyte, and other necessary battery components. Specifically, a diameter of the housing 110 may be determined according to a specific size of the electrode assembly 120, such as 18 mm, 21 mm, 46 mm. The housing 110 may be formed by a variety of materials, such as copper, iron, aluminum, steel, aluminum alloys. In order to prevent the housing 110 from rusting during long-term use, a layer of a rust-proof material such as metal nickel may be plated on a surface of the housing 110.

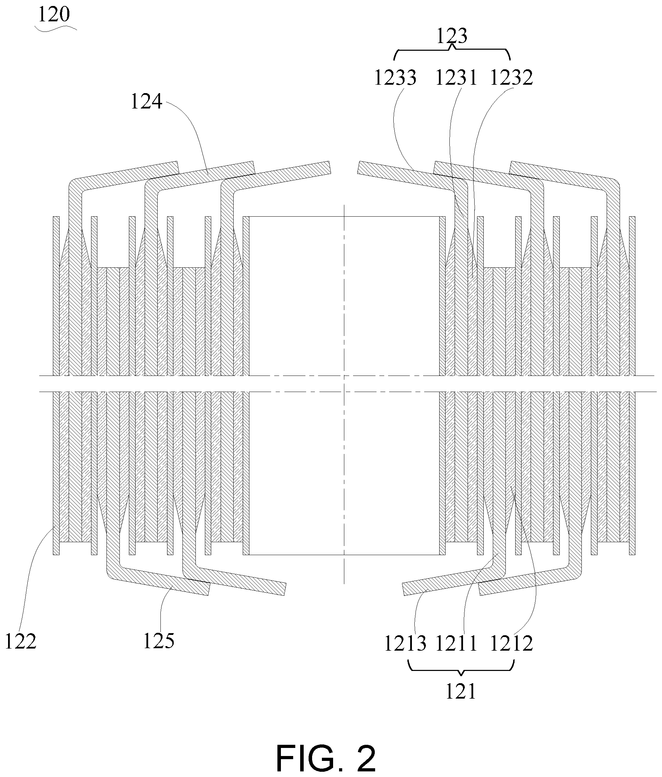

Referring to FIGs. 1 and 2, the electrode assembly 120 is disposed inside the housing 110, and the electrode assembly 120 is a component in the secondary battery 100 where an electrochemical reaction occurs. One or more electrode assemblies 120 may be included in the housing 110. The electrode assembly 120 includes a pole sheet and a separator 122, and the pole sheet and the separator 122 are wound to form a winding structure. Specifically, in this embodiment, the electrode assembly 120 includes a positive pole sheet 121, the separator 122, and a negative pole sheet 123 wound around an axial direction of the housing 110.

Referring to FIGs. 1 and 2, the positive pole sheet 121 includes a positive current collector 1211 and a positive active material layer coated on the positive current collector 1211. A first coated area 1212 coated with the positive active material layer and a first uncoated area 1213 not coated with the positive active material layer are formed on the positive current collector 1211. The first coated area 1212 and the first uncoated area 1213 are arranged along the axial direction of the housing 110. The first uncoated area 1213 extends toward one end of the secondary battery 100 in a height direction to an outside of the separator 122, and is bent toward an axis of the housing 110 to form a stacked positive tab 125.

Referring to FIGs. 1 and 2, the negative pole sheet 123 includes a negative current collector 1231 and a negative active material layer coated on the negative current collector 1231. A second coated area 1232 coated with the negative active material layer and a second uncoated area 1233 not coated with the negative active material layer are formed on the negative current collector 1231. The second coated area 1232 and the second uncoated area 1233 are arranged along the axial direction of the housing 110. The second uncoated area 1233 extends toward the other end of the secondary battery 100 in the height direction to the outside of the separator 122, and is bent toward the axis of the housing 110 to form a stacked negative tab 124.

Referring to FIGs. 1 and 2, the separator 122 is disposed between the positive pole sheet 121 and the negative pole sheet 123 to separate the positive active material layer from the negative active material layer. Taking the lithium-ion secondary battery 100 as an example, a material of the positive current collector 1211 may be aluminum. The positive active material layer includes a positive active material, and the positive active material may be lithium cobalt oxide, lithium iron phosphate, ternary lithium, lithium manganese oxide, etc. A material of the negative current collector 1231 may be copper. The negative active material layer includes a negative active material, and the negative active material may be carbon, silicon, etc. A base material of the separator 122 may be polypropylene (referred to as PP), polyethylene referred to as (PE), etc. In order to protect and insulate a battery cell, an insulating film may be coated on an outside of the battery cell. The insulating film may be synthesized by PP, PE, polyethylene terephthalate (referred to as PET), polyvinyl chloride (referred to as PVC), or other high molecular polymer materials.

Referring to FIGs. 1 and 2, furthermore, in the disclosure, the positive tab 125 faces the end wall 111 or the opening 113, and the negative tab 124 faces another end of the housing 110. In this embodiment, the positive tab 125 faces the end wall 111 and is electrically connected to the pole post 140, so that the pole post 140 is positively charged, while the negative tab 124 faces the opening 113, and the housing 110 is electrically connected to the negative tab 124, so that it is negatively charged. However, in other embodiments, the negative tab 124 may be connected to the pole post 140, while the positive tab 125 may be connected to the housing 110.

Referring to FIG. 1, the cover plate 130 is sealed and installed at the opening 113. A shape of an outer edge of the cover plate 130 corresponds to a shape of the opening 113, and the cover plate 130 is connected to the side wall 112 to seal the opening 113. In a specific embodiment, a circle of a rolling groove 114 recessed toward an inside of the housing 110 is rolled on an area near an outer end on the side wall 112 of the housing 110, and the rolling groove 114 includes a first side wall 1141 and a second side wall 1142. The first side wall 1141 is close to the electrode assembly 120 and may limit an axial displacement of the electrode assembly 120. One side of the second side wall 1142 away from the rolling groove 114 surrounds the housing 110 to form an annular step, and the cover plate 130 is placed on the step. A sealing ring is disposed between the cover plate 130 and a ring groove. The cover plate 130 is pressed tightly against the sealing ring by pier sealing at an edge of the opening 130, so as to form reliable connection.

Referring to FIGs. 1 and 2, the pole post 140 is fixed to the end wall 111 and is electrically connected to the electrode assembly 120. Specifically, the end wall 111 is provided with a pole post hole. The pole post 140 passes through to be installed in the pole post hole, and is insulated from the end wall 111. One end of the pole post 140 facing the electrode assembly 120 passes through the end wall 111 to be electrically connected to the positive tab 125 directly or through an indirect transfer. A structural form of the pole post 140 may be any suitable form that may pass through the end wall 111 to be electrically connected to the positive tab 125 of the electrode assembly 120. For example, a cross-section may be circular, square, prismatic, or a special-shaped contour that may achieve stable conductivity. A shape of the pole post hole corresponds to a shape of the pole post 140. In this embodiment, the cross-section of the pole post 140 is circular.

Referring to FIG. 1, the current collecting member 150 is disposed between the electrode assembly 120 and the cover plate 130, and the housing 110 and the electrode assembly 120 are electrically connected through the current collecting member 150. Specifically, the current collecting member 150 includes a current collecting body 151 and a housing connection portion 152 connected to an outer periphery of the current collecting body 151. The housing connection portion 152 may be an integral annular structure or one or more fan-shaped annular structures, as long as requirements for flow guiding and requirements for welding strength between the current collecting member 150 and the housing 110 are met. The housing connection portion 152 includes a bent section 1521 bent toward the axis of the housing 110 and a straight section 1522 connected to the current collecting body 151. Before the rolling groove 114 is rolled on the housing 110, the bent section 1521 is first welded and connected to the side wall 112 of the housing 110. While the rolling groove 114 is rolled, the bent section 1521 welded and connected to the housing 110 continues to be bent toward the axis of the housing 110, and finally forms a bend toward the axis of the housing 110 and is welded and connected to a surface of the rolling groove 114 facing the electrode assembly 120.

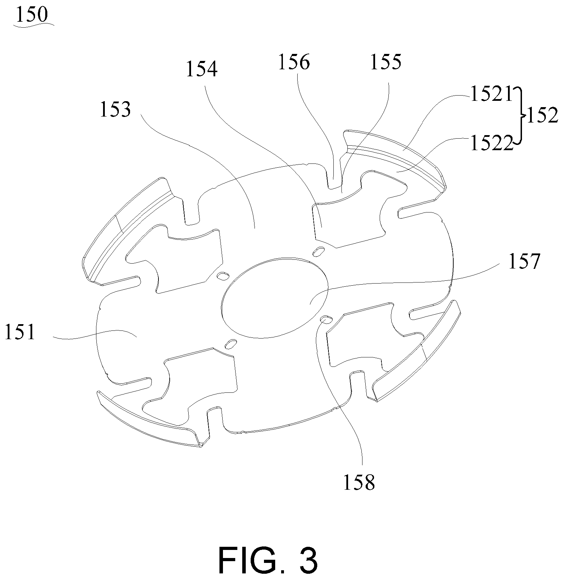

Referring to FIGs. 3 to 5, 7, and 10, the current collecting body 151 is fixedly connected to the tab. There are many ways to connect the current collecting body 151 and the tab, which may be, for example, welding connection, conductive adhesive connection, etc., as long as electrical connection between the current collecting member 150 and the tab may be achieved, and the requirements for flow guiding may be met. In this embodiment, the welding connection is adopted. Furthermore, the current collecting body 151 includes multiple tab connection portions 153 welded and connected to the tab, and the number, shape, and position of the tab connection portions 153 are not limited. Preferably, in this embodiment, the current collecting body 151 includes four tab connection portions 153 welded and connected to the tab, and the four tab connection portions 153 are arranged in a uniform array along a circumferential direction of the current collecting body 151. This configuration may enable welding balance and stability between the current collecting member 150 and the tab to be better, and have a more uniform flow guiding effect, thereby improving stability of flow guiding between the housing 110 and the electrode assembly 120.

Considering that when the housing connection portion 152 is bent toward the axis of the housing 110, the bending stress will be generated, and the bending stress will be transmitted to an inside of the current collecting member 150, thereby causing a technical issue of warp inside the current collecting member 150. Referring to FIGs. 3 to 5, 7, and 10, along a circumferential direction of the housing 110, the housing connection portion 152 is located between the two adjacent tab connection portions 153, so that the housing connection portion 152 and the tab connection portions 153 are disposed in the staggered manner in the circumferential direction of the housing 110. This configuration may implement that when the housing connection portion 152 is bent, the bending stress is not directly actuated to the tab connection portion 153 when it is transmitted toward the current collecting body 151, so as to weaken the transmission of the bending stress toward the tab connection portion 153.

Referring to FIGs. 3 to 5, 7, and 10, further, a through hole 154 is disposed between the two adjacent tab connection portions 153. A shape of the through hole 154 is not limited, and may be circular, square, fan-shaped, diamond-shaped, or other irregular shapes. A first connection portion 155 is formed between each of the tab connection portions 153 and the straight section 1522. A shape of the first connection portion 155 depends on the shape of the through hole 154. Due to presence of the through hole 154, a width of the first connection portion 155 is reduced, and the bending stress transmitted toward the tab connection portion 153 may be weakened. At the same time, due to the weakening of strength of the first connection portion 155, the first connection portion 155 is easily deformed under the actuation of the bending stress and absorbs part of the bending stress, which may further weaken the transmission of the bending stress toward the tab connection portion 153, thereby improving an issue of welding failure between the current collecting member 150 and the tab caused by the bending stress.

Referring to FIGs. 3 to 5, 7, and 10, in an example of the secondary battery 100 of the disclosure, a gap 156 is disposed between the straight section 1522 and the tab connection portion 153. The first connection portion 155 is located between the gap 156 and the through hole 154. The gap 156 has various shapes, which may be, for example, rectangular, fan-shaped, or other irregular shapes, which are not limited thereto. This configuration of the gap 156 may further reduce the strength of the first connection portion 155, making it easier to be deformed and absorb more stress, and ultimately further weakening the transmission of the bending stress toward the tab connection portion 153.

Referring to FIGs. 3 to 5, 7, and 10, in an example of the secondary battery 100 of the disclosure, a sum of minimum overcurrent areas of all the first connection portions 155 is a, and a total area of welding lines formed by welding the tab connection portion 153 and the tab is s, where a>s. The minimum overcurrent area of the first connection portion 155 is a minimum portion of a cross-sectional area of each of the first connection portions 155 along a circumferential direction of the current collecting member 150. The total area of the welding lines refers to a projection area of all the welding lines formed by welding the tab connection portion 153 and the tab along an axial direction of the electrode assembly 120. This configuration that the sum a of the minimum overcurrent areas of all the first connection portions 155 is greater than the total area of the welding lines may weaken the transmission of the bending stress while not affecting an overcurrent effect of the first connection portion 155.

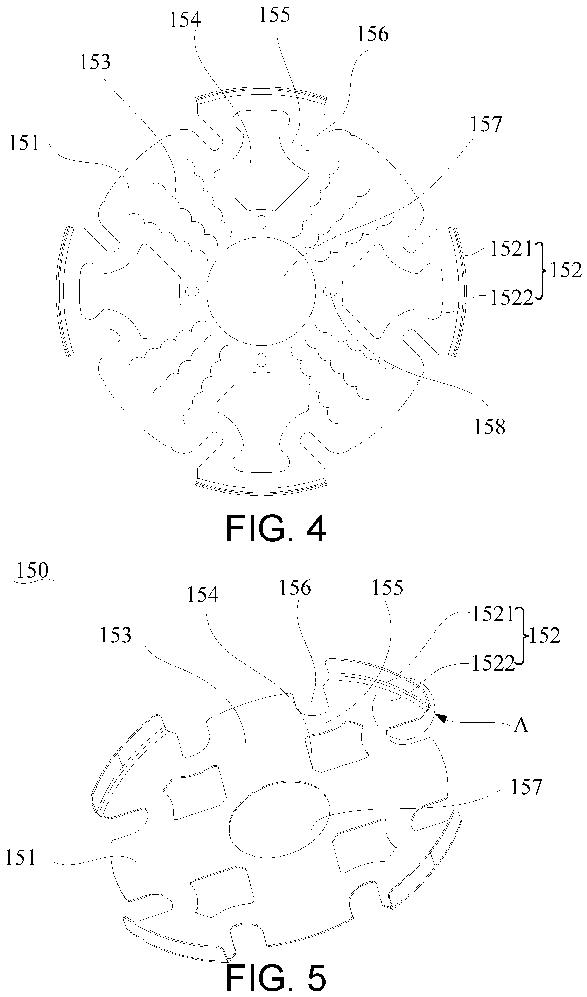

Referring to FIGs. 5 to 8, in an example of the secondary battery 100 of the disclosure, the straight section 1522 includes a first weak portion 1523. This configuration may weaken the stress generated when the housing connection portion 152 is bent. At the same time, since strength of the first weak portion 1523 is relatively low, under the actuation of the stress, the first weak portion 1523 of the straight section 1522 is deformed first to reduce the transmission of the stress toward a welding connection portion between the current collecting member 150 and the tab, thereby improving the issue of welding failure between the current collecting member 150 and the tab caused by the bending stress.

Referring to FIGs. 5 to 8, in an example of the secondary battery 100 of the disclosure, the first weak portion 1523 includes one or more combinations of thinning, notching, and hollowing. In some embodiments, only thinning, notching, or hollowing is provided, while in other embodiments, a combination of thinning and hollowing, or a combination of notching and hollowing may be provided. As long as a cross-sectional area of the first weak portion 1523 may be reduced, the strength of the first weak portion 1523 may be weakened, and the straight section 1522 may be easily bent at the first weak portion 1523, regardless of the above forms, an effect of reducing the strength of the first weak portion 1523 may be achieved by reducing the cross-sectional area of the first weak portion 1523.

Referring to FIGs. 5 to 8, in an example of the secondary battery 100 of the disclosure, a sum of minimum overcurrent areas of all the first weak portions 1523 is b, and a total area of welding lines formed by welding the current collecting body 151 and the tab is s, wherein b>s. It should be noted that the minimum overcurrent area of the first weak portion 1523 is a minimum portion of a cross-sectional area of each of the first weak portions 1523 along the circumferential direction of the current collecting member 150, and the total area of the welding lines refers to the projection area of all the welding lines formed by welding the tab connection portion 153 and the tab along the axial direction of the electrode assembly 120. This configuration that the sum b of the minimum overcurrent areas of all the first weak portions 1523 is greater than the total area s of the welding lines may weaken the transmission of the bending stress while not affecting an overcurrent effect of the first weak portion 1523.

Referring to FIGs. 5 to 8, in an example of the secondary battery 100 of the disclosure, the thinning and the notching both form a groove 1524 in the straight section 1522. Considering that the bending stress generated by the housing connection portion 152 will cause warp of the tab connection portion 153, similarly, the first weak portion 1523 of the straight section 1522 also has a tendency to bulge in a direction away from the electrode assembly 120. If the groove 1524 is located on one side of the current collecting body 151 away from the electrode assembly 120, when the first weak portion 1523 bulges, there is a risk of breaking the first weak portion 1523. Preferably, in this embodiment, the groove 1524 is located on one side of the current collecting body 151 facing the electrode assembly 120. This configuration may reduce the risk of breaking the first weak portion 1523 while weakening the transmission of bending stress.

Referring to FIGs. 3 and 4, in an example of the secondary battery 100 of the disclosure, a center hole 157 is disposed at a center of the current collecting body 151. A shape of the center hole 157 is not limited, which may be a circular hole, a square hole, a diamond-shaped hole, a polygonal hole, or other holes with irregular closed contours. A second weak portion 158 is included between each of the through holes 154 and the center hole 157. The second weak portion 158 is configured to be broken when an internal pressure of the secondary battery 100 exceeds a threshold value, so that the center hole 157 and the through hole 154 are communicated in a radial direction of the secondary battery 100. The second weak portion 158 may be in various forms, such as a notch, a thinning or a hollow structure that may be disposed between the through hole 154 and the center hole 157. The hollow structure may be one or more diamond-shaped holes, elliptical holes, circular holes, or rectangular holes, etc., which is not limited thereto, as long as an effect of weakening strength of a connection portion between the through hole 154 and the center hole 157 may be achieved, and the second weak portion 158 may be broken when the internal pressure of the secondary battery 100 exceeds the threshold value. After the second weak portion 158 is broken, the central hole 157 and the through hole 154 are communicated, and the current collecting body 151 is divided into multiple thin sheets. Under impact of the internal pressure, each of the thin sheets in a middle portion of the current collecting body 151 is folded in a direction away from the electrode assembly 120, further reducing a blocking area, facilitating discharge of internal substances of the second battery, thereby helping to prevent explosion of the secondary battery 100 and improving safety performance of the secondary battery 100.

In the first embodiment of the secondary battery 100 of the disclosure, referring to FIGs. 3 to 4, the current collecting member 150 in this embodiment includes four housing connection portions 152 and four tab connection portions 153. The four tab connection portions 153 are evenly distributed in a circumferential array along the circumferential direction of the current collecting body 151. Along the circumferential direction of the current collecting body 151, one housing connection portion 152 is disposed between every two adjacent tab connection portions 153, and one through hole 154 is disposed between every two adjacent tab connection portions 153. The shape of the through hole 154 is similar to a shape of a vase with a thinner middle. The through hole 154 includes a larger trapezoidal portion close to the center hole 157, a hyperbolic portion avoiding the gap 156, and a smaller trapezoidal portion close to the housing connection portion 152. One gap 156 is disposed between each of the straight sections 1522 and each of the tab connection portions 153, and the gap 156 is the rectangular opening 113. The first connection portion 155 is formed into a shape similar to a U-shape under a combined influence of the shapes of the gap 156 and the through hole 154. The first connection portion 155 in this shape has a longer length and a narrower width, and is more easily deformed under the actuation of the bending stress. The second weak portion 158 is disposed between each of the through holes 154 and the center hole 157. A shape of the second weak portion 158 is an elliptical hole, and an extension line of a long side of the ellipse may be connected to the through hole 154 and the center hole 157. When the internal pressure reaches the threshold value, the second weak portion 158 may be torn and communicated with the center hole 157 and the through hole 154.

In the second embodiment of the secondary battery 100 of the disclosure, referring to FIGs. 5 to 8, a difference between this embodiment and the first embodiment is that the through hole 154 lacks the trapezoidal portion close to the housing connection portion 152, and the gap 156 is enlarged toward one side close to the tab connection portion 153 on the basis of the first embodiment, and the shape is fan-shaped. This configuration does not significantly change the length of the first connection portion 155. However, since the through hole 154 lacks the trapezoidal portion close to the housing connection portion 152, an area of the straight section 1522 becomes larger. Therefore, the first weak portion 1523 may be disposed in the straight section 1522 to weaken the transmission of the bending stress toward the inside of the current collecting body 151. Preferably, in this embodiment, the first weak portion 1523 is configured to be a thinning structure, and the opening 113 of the groove 1524 formed by the thinning structure faces one side of the electrode assembly 120. This configuration may reduce the risk of breaking the first weak portion 1523 while weakening the transmission of the bending stress.

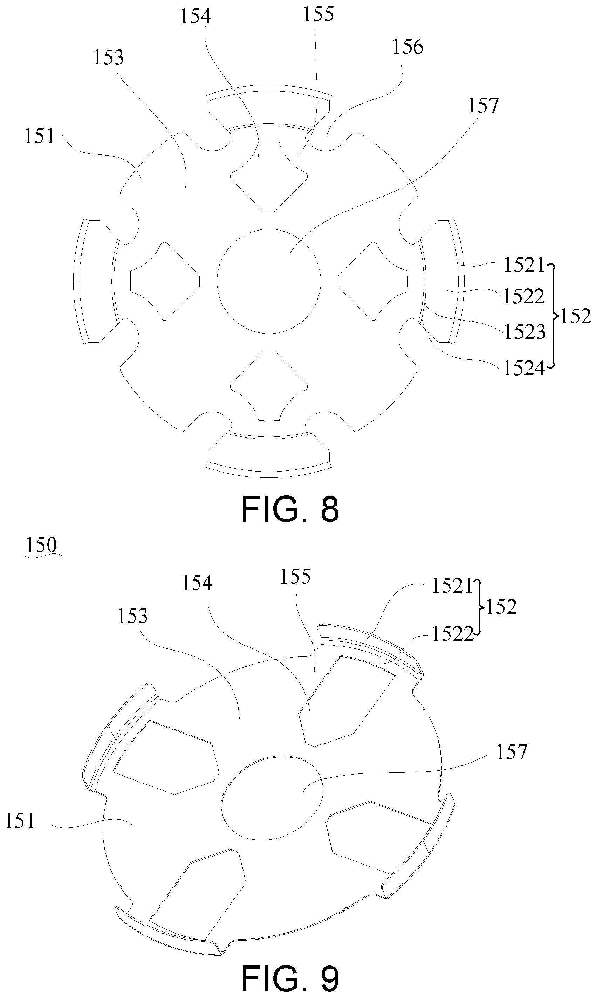

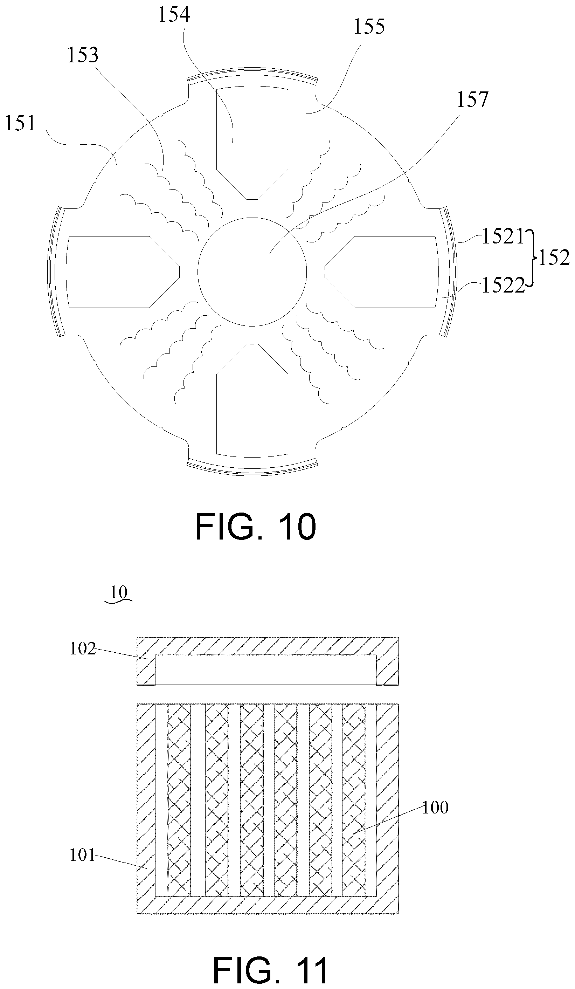

In the third embodiment of the secondary battery 100 of the disclosure, referring to FIGs. 9 and 10, a difference between this embodiment and the first embodiment is that the shape of the through hole 154 is different. The through hole 154 includes a triangular portion close to the center hole 157 and a rectangular portion close to the housing connection portion 152. An area of the through hole 154 in this configuration is increased, and effects of pressure relief and heat dissipation are better. The gap 156 is not disposed between the straight section 1522 and the tab connection portion 153, but the through hole 154 becomes larger, so that the first connection portion 155 still has the effect of easy deformation. The second weak portion 158 is not disposed between the center hole 157 and the through hole 154. However, a portion close to the center hole 157 is a triangular tip portion, and a distance between the through hole 154 and an edge of the center hole 157 is also less than that in the first embodiment. Therefore, when the internal pressure of the secondary battery 100 reaches the threshold value, there is still an effect of being easily torn between the through hole 154 and the center hole 157 to be communicated with the center hole 157 and the through hole 154.

Referring to FIG. 11, The disclosure further provides a battery cell 10, and the battery cell 10 includes any of the secondary batteries 100 described above. In an embodiment of the battery cell 10 of the disclosure, the battery cell 10 includes a box body 101, a box cover 102 and the secondary batteries 100. The secondary batteries 100 are placed in the box body 101, and are connected in series or in parallel, or in a mixture of series and parallel with each other. The box cover 102 is sealed on the box body 101 to protect the secondary batteries 100. It should be noted that, in addition to the secondary battery 100 of the disclosure, the battery cell 10 may also include portions such as a thermal management system and a circuit board of the battery cell 10. The battery cell 10 may be a battery module, or may also be a battery pack, an energy storage cabinet, etc., which will not be described one by one here.

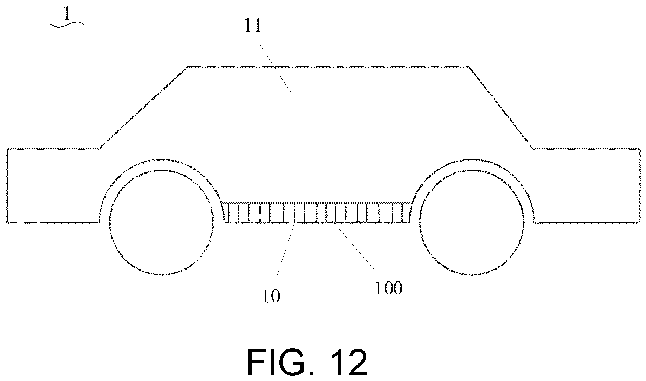

Referring to FIG. 12, the disclosure further provides an electronic device 1, and the electronic device 1 includes the battery cell 10 described above. The working portion 11 is electrically connected to the battery cell 10 to obtain electrical energy support. As an example, the electronic device 1 is a vehicle. The vehicle may be a fuel vehicle, a gas vehicle, or a new energy vehicle, and the new energy vehicle may be a battery electric vehicle, a hybrid electric vehicle, or an extended range electric vehicle, but the disclosure is not limited thereto. The working portion 11 is a vehicle body, and the battery cell 10 is disposed at a bottom of the vehicle body and provides the electrical energy support for driving of the vehicle or operation of electric elements in the vehicle. However, in some other embodiments, the electronic device 1 may further be a mobile phone, a portable device, a notebook computer, a ship, a spacecraft, an electric toy, an electric tool, etc. The spacecraft includes an aircraft, a rocket, a space shuttle, a spaceship, etc. The working portion 11 may be a unit component that may obtain the electrical energy of the battery cell 10 and perform corresponding work, such as a blade rotating unit of a fan, a dust-absorbing working unit of a vacuum cleaner. The electric toy includes a fixed or mobile electric toy, such as a game console, an electric car toy, an electric ship toy, an electric aircraft toy. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, an electric planer. The embodiment of the disclosure provides no special limitation to the electronic device 1 described above.

In the secondary battery of the disclosure, along the circumferential direction of the housing, the housing connection portion is located between the two adjacent tab connection portions, so that the housing connection portion and the tab connection portions are disposed in the staggered manner in the circumferential direction of the housing. This configuration may implement that when the housing connection portion is bent, the bending stress is not directly actuated to the tab connection portion when it is transmitted toward the current collecting body, so as to achieve the effect of weakening the bending stress transmitted toward the tab connection portion. The through hole is disposed between the two adjacent tab connection portions, and the first connection portion is formed between each of the tab connection portions and the straight section. Due to the presence of the through hole, the width of the first connection portion is reduced, which may weaken the bending stress transmitted toward the tab connection portion and absorb part of the bending stress through deformation, which may further weaken the transmission of the bending stress toward the tab connection portion, thereby improving the issue of welding failure between the current collecting member and the tab caused by the bending stress. Therefore, the disclosure effectively overcomes some practical issues in the related art, and thus has high utilization value and use significance.

## Claims

1. A secondary battery (100), comprising:
a housing (110) comprising a surrounding side wall (112), wherein one end of the side wall (112) is formed with an opening (113), and one end of the side wall (112) close to the opening (113) comprises a rolling groove (114) recessed toward an inside of the housing (110);
an electrode assembly (120) accommodated in the housing (110), wherein the electrode assembly (120) comprises a tab (124, 125) facing the opening (113);
a current collecting member (150) comprising a current collecting body (151) and a plurality of housing connection portions (152) connected to an outer periphery of the current collecting body (151), wherein the current collecting body (151) comprises a plurality of tab connection portions (153) fixedly connected to the tab (124, 125), each of the plurality of housing connection portions (152) comprises a bent section (1521) bent toward an axis of the housing (110) and a straight section (1522) connected to the current collecting body (151), and the bent section (1521) is welded to a surface of the rolling groove (114) facing the electrode assembly (120);
wherein the secondary battery (100) is **characterized in that** along a circumferential direction of the housing (110), each of the plurality of housing connection portions (152) is located between the two adjacent tab connection portions (153), a through hole (154) is disposed between the two adjacent tab connection portions (153), and a first connection portion (155) is formed between each of the tab connection portions (153) and the straight section (1522).

2. The secondary battery (100) according to claim 1, wherein a gap (156) is disposed between the straight section (1522) and the tab connection portion (153), and the first connection portion (155) is located between the gap (156) and the through hole (154).

3. The secondary battery (100) according to claim 2, wherein a sum of minimum overcurrent areas of all the first connection portions (155) is a, and a total area of welding lines formed by welding the tab connection portion (153) and the tab (124, 125) is s, wherein a>s.

4. The secondary battery (100) according to claim 1, wherein the straight section (1522) comprises a first weak portion (1523).

5. The secondary battery (100) according to claim 4, wherein the first weak portion (1523) comprises one or more combinations of thinning, notching, and hollowing.

6. The secondary battery (100) according to claim 5, wherein a sum of minimum overcurrent areas of all the first weak portions (1523) is b, and a total area of welding lines formed by welding the current collecting body (151) and the tab (124, 125) is s, wherein b>s.

7. The secondary battery (100) according to claim 5, wherein the thinning and the notching both form a groove (1524) in the straight section (1522), and the groove (1524) is located on one side of the current collecting body (151) facing the electrode assembly (120).

8. The secondary battery (100) according to claim 1, wherein a center hole (157) is disposed at a center of the current collecting body (151), a second weak portion (158) is comprised between each of the through holes (154) and the center hole (157), and the second weak portion (158) is configured to be broken when an internal pressure of the secondary battery (100) exceeds a threshold value, so that the center hole (157) and the through hole (154) are communicated in a radial direction of the secondary battery (100).

9. A battery cell (10), comprising the secondary battery (100) according to any one of claims 1-8.

10. An electronic device (1), comprising the battery cell (10) according to claim 9.
